# EUROPÄISCHE PATENTSCHRIFT

(11) **EP 0 683 213 B1**
(45) Veröffentlichungstag und Bekanntmachung des Hinweises auf die Patenterteilung: **28.10.1998**
(21) Anmeldenummer: 95107414.5
(22) Anmeldetag: 15.05.1995
(51) Int. Cl.: C09D 5/10

(54) **Schutzlack für einen Spiegel**
Protective coating for a mirror
Revêtement de protection pour un miroir

(30) Priorität: 19.05.1994 DE 4417595
(43) Veröffentlichungstag der Anmeldung: 22.11.1995
(73) Patentinhaber: Fr. MEGERLE GmbH LACKFABRIKEN UND RIVALINWERKE, D-61169 Friedberg/Hessen (DE)
(72) Erfinder: Beller, Andreas, D-34431 Marsberg (DE); Judas, Werner, D-35325 Mücke (DE)
(74) Vertreter: Rasch, Michael

(56) Entgegenhaltungen:
- EP-A- 0 548 413
- US-A- 5 215 832
- DATABASE WPI Section Ch, Week 7924 Derwent Publications Ltd., London, GB; Class A82, AN 79-44609B XP002009789 & JP-A-54 054 151 (DAINIPPON TORYO KK) , 28.April 1979
- DATABASE WPI Section Ch, Week 7632 Derwent Publications Ltd., London, GB; Class L01, AN 76-60640X XP002009790 & JP-A-51 073 016 (NIPPON SHEET GLASS) , 25.Juni 1976

## Beschreibung

Die Erfindung betrifft einen Schutzlack für einen Spiegel, der zum Schutz von Spiegeln auf diesen aufgebracht wird und eine organische Schutzschicht bildet.

Allgemein werden Spiegel durch aufeinanderfolgendes Belegen von Flachglas, welches nach dem Floatverfahren hergestellt wird, mit Silber und Kupfer hergestellt. Auf diesen Metallschichten, d. h. der Kupferschicht, werden dann organische Schutzschichten aufgebracht, nämlich im allgemeinen ein Grund- und ein Decklack.

Spiegel werden heute in sog. Spiegelbelegeanlagen nach dem folgenden Verfahren hergestellt:
Die Flachglasplatten werden auf ein Rollensystem aufgelegt, gereinigt und dann mittels verschiedener Methoden mit Silber als Reflexionsschicht und Kupfer als Schutzschicht für die Silberschicht belegt. Danach werden nacheinander zwei Lackschichten, nämlich ein Grund- und ein Decklack, im Gießverfahren appliziert und anschließend getrocknet. Die fertigen Spiegel müssen dann verarbeitbar und abstapelbar sein. Zur Beurteilung der Güte und der Oberflächenhärte der Schutzschicht, werden diese Spiegel dann verschiedenen Belastungen unterworfen, die das Langzeitverhalten durch Kurztests zu reproduzieren versuchen. Diese Beständigkeitsprüfungen sind in verschiedenen Vorschriften, nämlich der deutschen Industrienorm DIN 1238 bzw. ASTM B-368, 120h bzw. ISO 3770, festgelegt. Dabei sind hier die wesentlichen Belastungsprüfungen die Salzsprühnebelprüfung und der CASS-Test (CASS = CopperAcceleratedSaltSpray).

Die von der deutschen Industrienorm DIN 1238 für Spiegel zu erfüllenden Forderungen hinsichtlich der Haltbarkeit und Oberflächengüte können bisher nur erfüllt werden, wenn der Grundlack des aus zwei Schichten bestehenden Schutzlackes Bleipigmente, beispielsweise Bleimennige, enthält.

Die JP-A-51-73016 beschreibt einen Spiegelschutzlack auf der Grundlage eines sog. Japan-wachses, dem Zn-Partikel beigemengt sind. Darüber hinaus ist in dieser Druckschrift ausgeführt, daß synthtische Harzlacke mit Beimengung von Zn-Partikeln zur Beschichtung der freiliegenden Schnittkanten von Spiegeln verwendet werden können um die Randbereichskorrosion zu minimieren. Demgegenüber behandelt die vorliegende Erfindung Spiegel, bei denen die Schnittkanten nicht beschichtet sind.

Die US-5 215 832 betrifft bleifreie Lacke zur Beschichtung von Spiegeln, wobei jedoch ausschließlich der Schutz der beschichteten Flächen behandelt wird, während ein Schutz freiliegender Spiegelkanten nicht angesprochen wird. Darüber hinaus enthalten die Lacke Zink in Form von Verbindungen und nicht als metallisches Pulver.

Nachteilig bei den bekannten bleihaltigen Spiegelschutzlacken ist die toxische Wirkung und Gefährlichkeit des Bleies, so daß Bleiverbindungen wegen ihrer physiologischen Bedenklichkeit nicht mehr eingesetzt werden sollen.

Die JP-A-54-054151 beschreibt ein antikorrosives Anstrichmittel für Eisenoberflächen aus ungesättigtem Polyester, das Zinkstaub sowie Glasflocken enthält.

Der Erfindung liegt daher die Aufgabe zugrunde, einen Schutzlack für einen Spiegel zu schaffen, der beständig gegenüber Umgebungseinflüssen ist und in der Lage ist, die freiliegenden Kanten des beschichteten Spiegels vor Korrosionseinfüssen zu schützen, und der diese Voraussetzüngen ohne die Verwendung von Blei als Zusatzstoff erfüllt.

Die Aufgabe wird durch die Merkmale des Patentanspruchs 1 gelöst.

Durch die Verwendung von Zinkstaub, insbesondere Farbenzinkstaub weist dieser Lack vergleichbare Eigenschaften wie der bekannte bleihaltige Schutzlack auf und erfüllt so die o.g. einschlägigen Vorschriften. Insbesondere hat der erfindungsgemäße Lack überraschenderweise eine Schutzfunktion nicht nur für die damit beschichteten Flächen der metallischen Reflektionsschicht des Spiegels, sondern auch für freiliegenden Kanten des Spiegels. Die freiiiegenden Kanten sind Schnittkanten, die beim Zerschneiden der Glasplatte in Einzelspiegel vorgegebener Größe entstehen und die den Einflüssen der Umgebung ausgesetzt sind.

Die Wirkung des Zinkstaubes in dem Schutzlack könnte folgendermaßen erklärt werden. Die freiliegende Schnittkante des Spiegels setzt sich zusammen aus der Schichtenfolge Glas, Silber, Kupfer, zinkstaubhaltiger Grundlack und Decklack. An den Stellen, an denen die Zinkstaubteilchen die Kupferoberfläche berühren und diese Berührungsstellen mit aggressiven Verbindungen wie Salzlösungen etc. in Berührung kommen, können nun folgende Lokalelemente vorliegen: Ag/Cu und Cu/Zn. In dem Lokalelement Cu/Zn ist Zn das unedlere Metall und löst sich beispielsweise beim Besprühen mit einer Kupferchloridlösung auf Die Kupferschicht aber bleibt unversehrt.

Wesentlich bei der Erfindung ist neben dem Bestandteil Zn die Kombination des Filmbildners als Bindemittel und eines ungesättigten Polyesterharzes in einem Anteil von 10 bis 60 Gew.-%, insbesondere von 15 bis 50 Gew.-%, und noch spezieller von 20 bis 35 Gew.-% des Bindemittels. Überraschenderweise bewirkt erst diese Kombination eine gesicherte Herabsetzung der Randbereichskorrosion in Bereiche, die vorher lediglich mit Pb-haltigen Lakken zu erzielen waren.

Unter Filmbildner wird in diesem Zusammenhang derjenige Bestandteil des Bindemittels verstanden, der für das Zustandekommen des Films wesentlich ist. Vorzugsweise wird als Filmbildner Acrylharz (Polyacrylate) oder Alkydharz eingesetzt.
Nachfolgend wird eine bevorzugte Anwendungsausführung für einen Lack mit dem Zusatzstoff Zink gegeben, wie er als Spiegelschutzlack Verwendung findet.

### Beispiel 1

Eine gesäuberte Glasplatte von ca. 4 mm Stärke wird mit einer Silberschicht von ca. 1,0 g/m² und anschließend einer Kupferschicht von ca. 0,4 g/m² versehen, wobei die beiden Schichten durch Aufsprühen von entsprechenden Reaktionsiösungen aufgebracht werden, die auf der Glasoberfläche miteinander reagieren und sich dann die Metallschicht niederschlägt. Auf diesen mit der Silber- und Kupferschicht belegten Glasplatten wird anschließend ein Grundlack und ein Decklack aufgetragen. Der Grundlack, der vorzugsweise in einer Schichtstärke von ca. 15 µm aufgetragen wird, hat die Aufgabe, die geforderten Beständigkeiten zu gewährleisten, während der Decklack, der eine Schichtstärke von ca. 25 µm aufweist, neben der Erhöhung der Schichtstärke eine farbgebende Funktion hat. Die Spiegelplatten werden nach der Aufbringung der Lackschichten zerschnitten, so daß freie, also von Lack unbedeckte Kanten verbleiben.

Zur Verdeutlichung der Wirkung des Zinkstaubes werden nun drei Lacke miteinander verglichen, nämlich
1. bleifreier Acrylharzlack mit Zinkstaub
2. bleifreier Acrylharzlack ohne besonderes Korrosionsschutzpigment
3. bleihaltiger Acrylharzlack mit Bleimennige.

Der gemäß einer besonderen Ausführungsform der Erfindung verwendete bleifreie Acrylharzlack mit dem Zinkstaub als Ersatzstoff für die Bleimennige hat folgende Rezeptur:

| | Gew.-Teile |
|---|---|
| Epoxidmodifiziertes thermoplastisches Acrylharz | 18,00 |
| Styrolfreies, ungesättigtes Polyesterharz | 5,40 |
| Additive | 0,30 |
| Füllstoffe | 37,00 |
| Pigment | 13,60 |
| Lösungsmittel | 11,90 |
| Zinkstaub | 13,00, |

wobei als Additive ein Methylalkylpolysiloxan als oberflächenaktiver Stoff und ein Alkylammoniumsalz einer höhermolekularen Polycarbonsäure, als Füllstoff Talkum und Bariumsulfat und als Lösungsmittel Butanol und Xylol in Betracht kommen.

Das verwendete Acrylharz hat folgende technische Daten:

| | |
|---|---|
| Viskosität | 330 - 550 mPas |
| Säurezahl | 25 - 35 mg KOH/g |
| Dichte | 0,95 g/cm³. |
| Hauptanteil an nichtflüchtigen Stoffen | 40 % |

Der verwendete Farbenzinkstaub hat gemäß einer bevorzugten Ausführung der Erfindung die folgende Zusammensetzung:

| | Gew.-% |
|---|---|
| Zn | 99,0 - 99,7 |
| Zn, met. | 95,0 - 98,5 |
| Pb | 0,0007 |
| Cd | 0,03 |
| Fe | 0,0001 |
| Cu | 0,0001 |
| Mn | 0,000011 |
| Cl | 0,001 |
| Dichte: | 71 g/ccm |
| Ölzahl: | 7,0 g/100 g |
| Mittlerer Teilchendurchmesser: | 3,0 µm |

Vorzugsweise wird ein Zinkstaub verwendet, der dem internationalen Standard ISO 3549 "Zinc dust for paints" entspricht. Ein Farbenzinkstaub mit einer derartig geringen Bleiverunreinigung gilt als bleifrei. Die o.g. Vergleichslacke der. Punkte 2 und 3 haben eine ähnliche Zusammensetzung wie der mit der Rezeptur beschriebene.

Der verwendete Decklack hat vorzugsweise folgende Zusammensetzung (in Gew. Teilen)

| | |
|---|---|
| Alkydharz | 30,5 |
| Aminoharz | 8,0 |
| Additive | 2,0 |
| Füllstoffe | 40,9 |
| Pigment | 10,9 |
| Lösungsmittel | 12,0 |
| Wachslösung | 0,7 |

### Ergebnisse:

Die mit den drei Grundlacken beschichteten Belagplatten, die alle mit einem Decklack versehen worden sind, wurden anschließend einer Beständigkeitsprüfung unterworfen, die der deutschen Industrienorm DIN 1238 entspricht. Die folgende Tabelle zeigt die Versuchsresultate nach der DIN 50 021 (ASTM B-338, 120h bzw. ISO 3770) und nach DIN 53 209 (ASTM B-117, 480 h; ISO 3768), erreichten Ergebnisse in Abhängigkeit vom Lack:

| **CASS** | **SS** | **KK** |
|---|---|---|
| a) bleifreier L. < 1 mm mit Zusatzstoff | < 1 mm | m0 / g0 |
| b) bleifreier L. > 3 mm | > 3 mm | m0 / g0 |
| c) bleihaltiger L. 0,0 mm | 0,0 mm | m0 / g0 |

Bei dem sog. CASS-Test wird eine Lösung mit 50 g/l Natriumchlorid und 0,26 g/l CuCl₂ sowie Essigsäure zum Einstellen eines pH-Wertes von 3,1-3,3 bei 25°C für 120 Stunden auf den Spiegel aufgebracht, wobei die Korrosionstiefe im Randbereich der Spiegel gemessen wird. Dabei ist eine Kantenkorrosion von kleiner gleich 3 mm zulässig.

Beim Salzsprühversuch (SS) wird ebenfalls eine Natriumchloridlösung bei einem pH-Wert von 6,5 bis 7,2 für 480 Stunden auf die Versuchsspiegel gesprüht. Dabei ist eine Kantenkorrosion von kleiner gleich 3 mm zulässig.

Schließlich erfolgt bei der Kondenswasserprüfung (KK) eine Prüfung bei 100% rel. Luftfeuchtigkeit, 40°C und für eine Dauer von 480 Stunden. Dabei ist eine Kantenkorrosion von kleiner gleich 0,2 mm zulässig. Die in der Tabelle angegebenen Bezeichnungen sind Blasengradbezeichnungen entsprechend der deutschen Industrienorm DIN 53210. Der Wert m0g0 entspricht dem Blasengrad 10 nach ASTM D 714-56.

Aus den in der Tabelle aufgeführten Ergebnissen ist zu entnehmen, daß der zinkstaubhaltige Spiegelschutzlack die gute Schutzeigenschaften aufweist, die denjenigen .von bleihaltigen Lacken nur unwesentlich nachstehen und den Anforderungen der einschlägigen Industrienormen entspricht.

### Beispiel 2

In einer Versuchsreihe wurden verschiedene Lackzusammensetzungen untersucht, die der im Beispiel 1 beschriebenen Lackzusammensetzung mit der Ausnahme entsprachen, daß kein ungesättigtes Polyesterharz in der Grundlackschicht enthalten war. Die Decklackschicht entsprach derjenigen aus Beispiel 1. Dabei stellte sich heraus, daß auch bei Zusätzen von Zn-Staub eine signifikante Verbesserung bei der o.g. Korrosionsprüfung CASS nicht erzielbar war:

| | | | | | | |
|---|---|---|---|---|---|---|
| Zn-Anteil Gew.-% | 0,5 | 1,0 | 2,5 | 5,0 | 10 | 15 |
| Schichtdicken Grund/Deck | 30/38 | 30/40 | 20/36 | 60/45 | 40/40 | 50/50 |
| CASS-Test (mm) | 5,0 | 9,9 | 5,0 | 3,5 | 4,5 | 6,0 |

Insgesamt ist ersichtlich, daß die Ergebnisse des CASS-Tests wesentlich schlechter sind, als bei einer Lackzusammensetzung, die eine Kombination eines Filmbildners als Bindemittel mit einem ungesättigten Polyesterharz umfaßt.

### Beispiel 3

Ein Lack mit folgender Zusammensetzung (in Gew. Teilen)

| | |
|---|---|
| Alkydharz | 21,50 |
| ungesättigte Polyesterharz | 5,00 |
| Additive | 1,40 |
| Füllstoffe | 45,60 |
| Pigment | 7,00 |
| Lösungsmittel | 9,50 |
| Zinkstaub | 15,00 |

wobei Füllstoffe und Pigment denen im Beispiel 1 beschriebenen Produkten entsprechen, wurde den o.g. Versuchen CASS, SS, KK unterworfen, wobei sich folgende Ergebnisse einstellten:

| CASS | SS | KK |
|---|---|---|
| < 2 mm | < 3 mm | m0g0 |

### Beispiel 4

Ein Lack mit folgender Zusammensetzung (in Gew.-Teilen)

| | |
|---|---|
| Epoxidmodifiziertes, thermoplastisches Acrylharz | 18,00 |
| ungesättigte Polyesterharz | 5,40 |
| Additive | 0,30 |
| Füllstoffe | 37,00 |
| Pigment | 13,60 |
| Lösungsmittel | 11,90 |
| Zinkstaub | 5,00 |

wobei Füllstoffe und Pigment denen im Beispiel 1 beschriebenen Produkten entsprechen, wurde dem CASS-Test unterworfen, wobei sich ein Randschaden nach CASS von <=1,5 mm ergab. Dieser ist zwar besser als der zulässige Grenzwert (2,5 mm), jedoch deutlich schlechter als bei dem Zn-Anteil von 13 Gew.-Teilen des Beispiels 1.

### Beispiel 5

Ein Lack mit folgender Zusammensetzung (in Gew.-%)

| | |
|---|---|
| Acrylatharz, fremdvernetzend | 7,20 |
| Epoxidharz-Fettsäureester | 7,20 |
| ungesättigtes Polyesterharz | 3,60 |
| Additive | 0,65 |
| Füllstoffe | 40,70 |
| Pigment | 14,80 |
| Lösungsmittel | 11,55 |
| Zinkstaub | 14,30 |

wobei Füllstoffe und Pigment denen im Beispiel 1 beschriebenen Produkten entsprechen, wurde in einer Schichtdicke von 15 µm zusammen mit dem Decklack gemäß Beispiel 1 in einer Schichtdicke von 25 µm aufgebracht und dem CASS-Test unterworfen, wobei sich ein Randschaden nach CASS von <=1,5 mm ergab.

## Patentansprüche

1. Schutzlack für einen Spiegel mit
- einem ungesättigten Polyesterharz, sowie
- einem davon verschiedenen Filmbildner als Bindemittel, wobei das Polyesterharz in einem Anteil von 10 bis 60 Gew.-% des Bindemittelanteils vorliegt und im Schutzlack ferner Zinkstaub in einem Anteil von 5 bis 20 Gew.-% vorhanden ist.

2. Schutzlack nach Anspruch 1, wobei der Filmbildner ein epoxidmodifiziertes Acrylharz ist.

3. Schutzlack nach Anspruch 1, wobei der Filmbildner Alkydharz ist.

4. Schutzlack nach Anspruch 1, wobei der Gehalt an Zinkstaub 8 bis 16 Gew.-%, vorzugsweise 12 bis 14 Gew.-%, beträgt.

5. Schutzlack nach Anspruch 1, wobei der mittlere Teilchendurchmesser des Zinkstaubes 2,5 - 10 µm beträgt.

6. Schutzlack nach Anspruch 1, wobei der metallische Zinkgehalt im Zinkstaub 95 - 99 Gew.-% beträgt.

7. Schutzlack nach Anspruch 1, wobei der Hauptanteil an nichtflüchtigen Stoffen des Acrylharzes ca. 40 % beträgt.

8. Schutzlack nach Anspruch 1, wobei der Anteil des ungesättigem Polyesterharzes 15 bis 50 Gew.-% des Bindemittelanteils beträgt.

9. Spiegel mit einer Glasplatte, die einseitig mit einer Silberschicht und einer darüber angeordneten Kupferschicht versehen ist, dadurch gekennzeichnet, daß auf der Kupferschicht mindestens eine Lackschicht nach einem der vorherigen Ansprüche aufgebracht ist und die Ränder des Spiegels unbeschichtet sind.

10. Verfahren zur Herstellung eines Spiegels, mit folgenden Schritten:
- Aufbringen einer Silber- und einer Kupferschicht auf die Rückseite einer Glasplatte;
- Aufbringen einer Lackschicht mit der Zusammensetzung von einem der Ansprüche 1 bis 8,
- Trocknen des Lackes, und
- Zerschneiden der Glasplatte in Spiegel vorgegebener Größe.

## Claims

1. Protective lacquer for a mirror, comprising
- an unsaturated polyester resin, and
- a film former, which differs therefrom, as the bonding agent,
wherein the polyester resin is in a proportion of between 10 and 60 % by wt. of the proportion of bonding agent, and zinc dust is also present in the protective lacquer in a proportion of between 5 and 20 % by wt.

2. Protective lacquer according to claim 1, wherein the film former is an epoxy-modified acrylic resin.

3. Protective lacquer according to claim 1, wherein the film former is alkyd resin.

4. Protective lacquer according to claim 1, wherein the content of zinc dust is between 8 and 16 % by wt., preferably between 12 and 14 % by wt.

5. Protective lacquer according to claim 1, wherein the mean particle diameter of the zinc dust is 2.5 - 10 µm,

6. Protective lacquer according to claim 1, wherein the metallic zinc content in the zinc dust is 95 - 99 % by wt.

7. Protective lacquer according to claim 1, wherein the main proportion of non-volatile substances of the acrylic resin is approx. 40 %.

8. Protective lacquer according to claim 1, wherein the proportion of the unsaturated polyester resin is between 15 and 50 % by wt. of the proportion of bonding agent.

9. Mirror, having a glass plate which is provided on one surface with a silver layer and a copper layer disposed thereabove, characterised in that at least one layer of lacquer according to one of the preceding claims is applied to the copper layer, and the edges of the mirror are uncoated.

10. Method of producing a mirror, comprising the following steps:
- applying a silver layer and a copper layer to the rear surface of a glass plate;
- applying a layer of lacquer having the composition of one of claims 1 to 8,
- drying the lacquer, and
- cutting the glass plate into a mirror of a prescribed size.

## Revendications

1. Vernis de protection pour un miroir, comportant
- une résine de polyester insaturé, et
- un agent de formation de film, différent de ladite résine, comme liant, la résine de polyester représentant de 10 à 60% en poids de la teneur en liant, et le vernis de protection contient en outre de 5 à 20% en poids de poussière de zinc.

2. Vernis de protection selon la revendication 1, dans lequel l'agent de formation d'un film est une résine acrylique modifiée par époxy.

3. Vernis de protection selon la revendication 1, dans lequel l'agent de formation d'un film est une résine alkyde.

4. Vernis de protection selon la revendication 1, dans lequel la teneur en poussière de zinc vaut de 8 à 16% en poids, de préférence de 12 à 14% en poids.

5. Vernis de protection selon la revendication 1, dans lequel le diamètre moyen des particules de poussière de zinc vaut entre 2,5 et 10 µm.

6. Vernis de protection selon la revendication 1, dans lequel la teneur en zinc métallique dans la poussière de zinc vaut de 95 à 99% en poids.

7. Vernis de protection selon la revendication 1, dans lequel la teneur principale en matière non volatile de la résine acrylique vaut environ 40%.

8. Vernis de protection selon la revendication 1, dans lequel la teneur en résine de polyester insaturé vaut de 15 à 50% en poids de la teneur en liant.

9. Miroir comportant une plaque de verre dotée sur une face d'une couche d'argent et d'une couche de cuivre disposée sur cette dernière, caractérisé en ce que sur la couche de cuivre est appliquée au moins une couche de vernis selon l'une des revendications précédentes, et en ce que les bords du miroir ne sont pas revêtus.

10. Procédé pour la fabrication de miroirs, comportant les étapes consistant à :
- appliquer une couche d'argent et une couche de cuivre sur la face arrière d'une plaque de verre,
- appliquer une couche de vernis présentant la composition selon l'une des revendications 1 à 8,
- faire sécher le vernis, et
- découper la plaque de verre à la taille prévue pour le miroir.
